# EUROPEAN PATENT SPECIFICATION

(11) **EP 4 665 175 B1**
(45) Date of publication and mention of the grant of the patent: **21.10.2026**
(21) Application number: 24704506.5
(22) Date of filing: 16.02.2024
(51) Int. Cl.: A24D 1/20, A24D 3/04

(54) **AEROSOL-GENERATING ARTICLE WITH HUMIDITY SENSITIVE MATERIAL**
AEROSOLERZEUGENDER ARTIKEL MIT FEUCHTIGKEITSEMPFINDLICHEM MATERIAL
ARTICLE DE GÉNÉRATION D'AÉROSOL AVEC MATÉRIAU SENSIBLE À L'HUMIDITÉ

(30) Priority: 16.02.2023 EP 23157048
(43) Date of publication of application: 24.12.2025
(73) Proprietor: Philip Morris Products S.A., 2000 Neuchâtel (CH)
(72) Inventor: UTHURRY, Jerome, 2000 Neuchâtel (CH)
(74) Representative: Abitz & Partner
(86) International application number: PCT/EP2024/053950
(87) International publication number: WO 2024/170722

(56) References cited:
- WO-A1-2021/170675
- WO-A1-2022/074161
- KR-A- 20220 160 616

## Description

The present invention relates to an aerosol-generating article.

It is known to provide an aerosol-generating article for generating an inhalable vapor. Document KR20220160616 relates to aerosol-generating articles for generating an inhalable aerosol when heated. In particular, the present disclosure relates to an aerosol-generating article for generating an inhalable aerosol upon heating comprising an aerosol-forming substrate comprising a gel composition, and an upstream element.

Such an aerosol-generating article may be used in an aerosol-generating device. Such devices may heat aerosol-forming substrate to a temperature at which one or more components of the aerosol-forming substrate are volatilised without burning the aerosol-forming substrate. Aerosol-forming substrate may be provided as part of the aerosol-generating article. The aerosol-generating article may have a rod shape for insertion of the aerosol-generating article into a cavity, such as a heating chamber, of the aerosol-generating device. A heating element may be arranged in or around the heating chamber for heating the aerosol-forming substrate once the aerosol-generating article is inserted into the heating chamber of the aerosol-generating device. A user experience may depend upon the ambient humidity. Particularly for the first puff, a user may experience an undesired warm sensation when the ambient humidity is high.

It would be desirable to have an aerosol-generating article reducing or preventing an undesired warm sensation during a puff when the ambient humidity is high. It would be desirable to have an aerosol-generating article reducing or preventing an undesired warm sensation during a first puff when the ambient humidity is high. It would be desirable to have an aerosol-generating article capable of delivering a more uniform aerosol when the ambient humidity is high.

According to an embodiment of the invention there is provided an aerosol-generating article comprising a substrate portion comprising an aerosol-forming substrate,a ventilation portion downstream of the substrate portion, wherein the ventilation portion comprises perforations in a side-wall of the ventilation portion, wherein the perforations are configured to allow ambient air to be drawn into the ventilation portion through the perforations, and a front plug upstream of the substrate portion, wherein the front plug comprises a humidity sensitive material that expands when subjected to an increasing humidity such that a resistance to draw of the front plug increases and that shrinks when subjected to a decreasing humidity such that a resistance to draw of the front plug decreases, wherein the humidity sensitive material expands by at least 10% when the humidity sensitive material is subjected to a humidity increase from a relative humidity of 50% to a relative humidity of 75%, wherein one of:the humidity sensitive material comprises EVA resin, super absorbent polymer and carboxymethyl cellulose (CMC),the humidity sensitive material comprises Cellulose acetate and polyesters,the humidity sensitive material comprises Acrylamide and carboxymethyl cellulose (CMC),the humidity sensitive material comprises HNBR rubber or acrylate copolymer and carboxymethyl cellulose (CMC).

An increase in the resistance to draw of the front plug in an ambient environment with relatively high humidity may increase the resistance to draw of the whole aerosol-generating article. An increase in the resistance to draw of the whole aerosol-generating article may be desired in an ambient environment with relatively high humidity. Particularly, an increase in the resistance to draw of the whole aerosol-generating article may be beneficial in such a situation as a user may draw less aerosol into his or her mouth during a first puff. This may reduce an undesired warm sensation when the ambient humidity is high. Particularly preferred, the provision of the ventilation portion with the perforations in the sidewall of the ventilation portion may synergistically interact with the increase in the resistance to draw of the upstream humidity sensitive material. More specifically, if the resistance to draw of the humidity sensitive material increases, more ambient air will be drawn into the aerosol-generating article in the ventilation portion downstream of the humidity sensitive material. This may dilute the generated aerosol. This may cool down the generated aerosol. The aerosol will be created with a higher ratio of ambient air to air being drawn through the whole aerosol-generating article leading to a milder experience for a user particularly during a first puff.

A decrease in the resistance to draw of the front plug in an ambient environment with relatively low humidity may decrease the resistance to draw of the whole aerosol-generating article. A user experience may in this way be optimized for the current humidity of the ambient environment. More particularly, less ambient air will be drawn into the aerosol-generating article through the perforations of the ventilation portion in case of a low humidity environment. The user will thus experience a desired stronger experience due to a lower ration of ambient air to air being drawn through the whole aerosol-generating article.

In other words, the present invention provides an aerosol-generating article that passively and automatically adjusts the ratio of ambient air being drawn through the perforations of the ventilation zone into the aerosol-generating article and the air being drawn through the whole aerosol-generating article depending upon the humidity of the ambient environment. As a result, an undesired warm sensation during a puff of a user when the ambient humidity is high is reduced or prevented.

The humidity sensitive material may be arranged in direct fluid contact with the ambient environment. As least a distal end face of the humidity sensitive material an undesired warm sensation when the ambient humidity is high. The humidity sensitive material may thus be subjected to the ambient humidity. The humidity sensitive material may absorb more or less water from the ambient environment depending upon the humidity of the ambient environment. This in turn may lead to a an expansion of the humidity sensitive material in case of a high humidity ambient environment.

The humidity sensitive material may expand when subjected to an increasing humidity and may shrinks when subjected to a decreasing humidity. Alternatively, the humidity sensitive material may expand when subjected to an increasing humidity and may not expand when subjected to a decreasing humidity. Alternatively, the humidity sensitive material may expand when subjected to an increasing humidity and may be unchanged when subjected to a decreasing humidity.

The term "expand" denotes an increase in volume. The term "shrink" denotes a decrease in volume. Exemplarily, a 10% expansion may mean that the volume has been increased by 10%.

The characteristic of the humidity sensitive material to expand when subjected to a relatively high humidity may lead to an increase of the resistance to draw due to the humidity sensitive material being confined in the aerosol-generating article. More specifically, a tipping paper may be arranged surrounding the periphery of the humidity sensitive material to form the front plug. This tipping paper may prevent a radial expansion of the humidity sensitive material. The expansion of the humidity sensitive material may thus be an internal expansion reducing the ability of air flowing through the humidity sensitive material.

The humidity sensitive material expands by at least 10%, preferably by at least 20%, more preferably by at least 30%, most preferably by at least 40%, when the humidity sensitive material is subjected to a humidity increase from a relative humidity of 50% to a relative humidity of 75%.

The expansion of humidity sensitive material may be a material characteristic observable when the humidity sensitive material is not confined. As mentioned herein, the humidity sensitive material may be confined in the aerosol-generating article via a tipping paper surrounding the periphery of the humidity sensitive material thereby forming the front plug. The expansion may thus lead to a reduction in the ability of the humidity sensitive material to allow airflow through the material due a reduction in the cross-section of flow through the humidity sensitive material.

The cross-section of flow through the humidity sensitive material may decrease by at least 10%, preferably by at least 20%, more preferably by at least 30%, most preferably by at least 40%, when the humidity sensitive material is subjected to a humidity increase from a relative humidity of 50% to a relative humidity of 75%.

Alternatively of describing the property of the front plug to increase the resistance to draw in high humidity conditions and the decrease the resistance to draw in low humidity conditions by means of the expansion/shrinking of the humidity sensitive material, an increase/decrease in the weight of the humidity sensitive material may be used. In more detail, the humidity sensitive material absorbs water in high humidity conditions and gains weight in the process. The added weight leads to a reduction in the ability of the humidity sensitive material to allow airflow through the humidity sensitive material. Hence, the increase in weight due to the absorption of water leads to an increase in resistance to draw. Measuring a weight difference may thus be indicative of an expansion or shrinking of the humidity sensitive material.

The resistance to draw of the front plug may increase by at least 10%, preferably by at least 20%, more preferably by at least 40%, most preferably by at least 60%, when the humidity sensitive material is subjected to a humidity increase from a relative humidity of 50% to a relative humidity of 75%.

The humidity sensitive material may comprise, preferably consists of, EVA resin, super absorbent polymer and CMC. The humidity sensitive material may comprise, or consist of, EVA resin, super absorbent polymer and CMC as described in JP2014198760A.

The humidity sensitive material may comprise, preferably consists of, acrylamide and CMC. The humidity sensitive material may comprise, or consist of, acrylamide and CMC as described in WO2016163160 A1.

The humidity sensitive material may comprise, preferably consists of, HNBR rubber or acrylate copolymer and CMC. The humidity sensitive material may comprise, or consist of, HNBR rubber or acrylate copolymer and CMC as described in US 2009/0084550A1.

The humidity sensitive material may comprise, preferably consists of, polyacrylic acid or polyamide and a filler material. The humidity sensitive material may comprise, or consist of, polyacrylic acid or polyamide and a filler material as described in US 2006/0086501A1.

The humidity sensitive material may comprise, preferably consists of, crosslinked polysaccharides. The humidity sensitive material may comprise, or consist of, crosslinked polysaccharides as described in EP0566118A1.

The humidity sensitive material may comprise, preferably consists of, poly-vinyl-alcohol (PVA) coated crimped paper.

The humidity sensitive material may comprise, preferably consists of, 78 gsm crimped paper and polysaccharide.

The humidity sensitive material may comprise, preferably consists of, superperga 43gsm crimped paper and 16gsm skalax.

The front plug may comprise a paper matrix. The humidity sensitive material described herein may be added to the paper matrix. The paper matrix may be impregnated with the humidity sensitive material described herein. Preferably, up to 20 wt% of humidity sensitive material may be added to the paper matrix. Preferably, the paper matrix may be impregnated with up to 20 wt% of humidity sensitive material. Particularly preferred, between 5 wt% and 10 wt% of humidity sensitive material may be added to the paper matrix. Particularly preferred, the paper matrix may be impregnated with between 5 wt% and 10 wt% of humidity sensitive material.

The front plug may comprise a non-woven material. The humidity sensitive material described herein may be added to the non-woven material. The non-woven material may be impregnated with the humidity sensitive material described herein. Preferably, up to 30 wt% of humidity sensitive material may be added to the non-woven material. Preferably, the non-woven material may be impregnated with up to 30 wt% of humidity sensitive material. Particularly preferred, between 10 wt% and 20 wt% of humidity sensitive material may be added to the non-woven material. Particularly preferred, the non-woven material may be impregnated with between 10 wt% and 20 wt% of humidity sensitive material.

The front plug may comprise a fiber material. The humidity sensitive material may be added to the fiber material as a coating.

One or more the paper matrix, the non-woven material and the fiber material may act as a support material for the humidity sensitive material.

The front plug may have a resistance to draw of between 10 mmWg and 40 mmWg, preferably of between 15 mmWg and 30 mmWg at a relative humidity of 50%.

The front plug may have a resistance to draw of between 20 mmWg and 60 mmWg, preferably of between 30 mmWg and 50 mmWg at a relative humidity of 75%.

The aerosol-generating article may have a diameter of between 4.5 mm and 8.0 mm, preferably of between 5.0 mm and 7.5 mm, more preferably of 7.3 mm.

The front plug may have a length of between 3 mm and 7 mm, preferably of between 4 mm and 6 mm, more preferably of 5 mm.

The substrate portion may have a length of between 9.0 mm and 15.0 mm, preferably of between 10.5 mm and 13.5 mm, more preferably of 12.0 mm.

The ventilation portion may be configured as a cooling portion having a length of between 17 mm and 25 mm, preferably of between 19 mm and 22 mm, more preferably of 21 mm.

A ventilation rate of the ventilation portion may be between 30% and 50%, preferably between 35% and 45%, more preferably of 40%.

The perforations may be configured as described in PCT/EP2022/073899. Particularly, the ventilation portion of the present application may correspond to the ventilation zone as described in PCT/EP2022/073899 having the corresponding perforations described in PCT/EP2022/073899.

The ventilation portion may have a sidewall made of cardboard.

The structural integrity of the ventilation portion may be facilitated by the cardboard sidewall. The cardboard sidewall may be circular. Apart from the cardboard sidewall and a potential tipping paper surrounding the periphery of the cardboard sidewall, the ventilation portion may not comprise further elements. The ventilation portion may comprise a tipping paper surrounding the periphery of the cardboard sidewall. The ventilation portion may consist of cardboard. The ventilation portion may consist of cardboard and the tipping paper and the perforations through the sidewall and the tipping paper.

The tipping paper may extend upstream or downstream of the ventilation portion to one or more elements of the aerosol-generating article holding the respective elements of the aerosol-generating article together. Particularly, the tipping paper may extend downstream towards a mouthpiece filter to hold together the ventilation portion and the mouthpiece filter. The tipping element may extend upstream towards the substrate portion to hold together the ventilation portion and the substrate portion. The tipping paper may be wrapped around the periphery of one or more of the ventilation portion, the mouthpiece filter and the substrate portion.

The aerosol-generating article may further comprise a mouthpiece filter downstream of the ventilation portion and preferably having a length of between 5 mm and 9 mm, preferably of between 6 mm and 8 mm, more preferably of 7 mm. The mouthpiece filter may comprise cellulose acetate.

The resistance to draw of the aerosol-generating article may be the sum of the individual resistance to draw values of the individual element of the aerosol-generating article. In other words, the resistance to draw of the aerosol-generating article may be the resistance to draw of the front plug plus the resistance to draw of the substrate portion plus the resistance to draw of the ventilation portion plus the resistance to draw of the mouthpiece filter plus the resistance to draw of any further element of the aerosol-generating article contributing to the resistance to draw. Due to the hollow nature of the ventilation portion, the resistance to draw of the ventilation portion may be zero or close to zero.

The aerosol-forming substrate may comprise cut filler. The aerosol-forming substrate may comprise between 16 wt% and 20 wt% aerosol former, preferably between 17 wt% and 19 wt% aerosol former, more preferably 18 wt% aerosol former.

The aerosol-forming substrate may have a bulk density of between 0.28 mg/mm3 and 0.36 mg/mm3, preferably of between 0.30 mg/mm3 and 0.34 mg/mm3, more preferably of 0.32 mg/mm3.

The substrate portion may have a resistance to draw of between 24 mmWG and 36 mmWG, preferably between 27 mmWG and 33 mmWG, more preferably 30 mmWG.

The invention further relates to an aerosol-generating system comprising an aerosol-generating article as described herein and an aerosol-generating device having a cavity for receiving the aerosol-generating article.

As used herein, the terms 'proximal', 'distal', 'downstream' and 'upstream' are used to describe the relative positions of components, or portions of components, of the aerosol-generating device or the aerosol-generating article in relation to the direction in which a user draws on the aerosol-generating device or the aerosol-generating article during use thereof.

The aerosol-generating device may comprise a mouth end through which in use an aerosol exits the aerosol-generating device and is delivered to a user. The mouth end may also be referred to as the proximal end. In use, a user draws on the proximal or mouth end of the aerosol-generating device in order to inhale an aerosol generated by the aerosol-generating device. Alternatively, and particularly preferred, a user may directly draw on an aerosol-generating article inserted into an opening at the proximal end of the aerosol-generating device. In this case, the user preferably draws on the front plug of the aerosol-generating article. The opening at the proximal end of the aerosol-generating device may be an opening of the cavity. The cavity may be configured to receive the aerosol-generating article. The aerosol-generating device comprises a distal end opposed to the proximal or mouth end. The proximal or mouth end of the aerosol-generating device may also be referred to as the downstream end and the distal end of the aerosol-generating device may also be referred to as the upstream end. Components, or portions of components, of the aerosol-generating device may be described as being upstream or downstream of one another based on their relative positions between the proximal, downstream or mouth end and the distal or upstream end of the aerosol-generating device.

As used herein, an 'aerosol-generating device' relates to a device that interacts with an aerosol-forming substrate to generate an aerosol. The aerosol-forming substrate may be part of an aerosol-generating article, for example part of a smoking article. An aerosol-generating device may be a smoking device that interacts with an aerosol-forming substrate of an aerosol-generating article to generate an aerosol that is directly inhalable into a user's lungs thorough the user's mouth. An aerosol-generating device may be a holder. The device may be an electrically heated smoking device. The aerosol-generating device may comprise a housing, electric circuitry, a power supply, a heating chamber and a heating element.

As used herein with reference to the present invention, the term 'smoking' with reference to a device, article, system, substrate, or otherwise does not refer to conventional smoking in which an aerosol-forming substrate is fully or at least partially combusted. The aerosol-generating device of the present invention is arranged to heat the aerosol-forming substrate to a temperature below a combustion temperature of the aerosol-forming substrate, but at or above a temperature at which one or more volatile compounds of the aerosol-forming substrate are released to form an inhalable aerosol.

The aerosol-generating device may comprise electric circuitry. The electric circuitry may comprise a microprocessor, which may be a programmable microprocessor. The microprocessor may be part of a controller. The electric circuitry may comprise further electronic components. The electric circuitry may be configured to regulate a supply of power to the heating element. Power may be supplied to the heating element continuously following activation of the aerosol-generating device or may be supplied intermittently, such as on a puffby-puff basis. The power may be supplied to the heating element in the form of pulses of electrical current. The electric circuitry may be configured to monitor the electrical resistance of the heating element, and preferably to control the supply of power to the heating element dependent on the electrical resistance of the heating element.

The aerosol-generating device may comprise a power supply, typically a battery, within a main body of the aerosol-generating device. In one embodiment, the power supply is a Lithium-ion battery. Alternatively, the power supply may be a Nickel-metal hydride battery, a Nickel cadmium battery, or a Lithium based battery, for example a Lithium-Cobalt, a Lithium-Iron-Phosphate, Lithium Titanate or a Lithium-Polymer battery. As an alternative, the power supply may be another form of charge storage device such as a capacitor. The power supply may require recharging and may have a capacity that enables to store enough energy for one or more usage experiences; for example, the power supply may have sufficient capacity to continuously generate aerosol for a period of around six minutes or for a period of a multiple of six minutes. In another example, the power supply may have sufficient capacity to provide a predetermined number of puffs or discrete activations of the heating element.

The cavity of the aerosol-generating device may have an open end into which the aerosol-generating article is inserted. The open end may be a proximal end. The cavity may have a closed end opposite the open end. The closed end may be the base of the cavity. The closed end may be closed except for the provision of air apertures arranged in the base. The base of the cavity may be flat. The base of the cavity may be circular. The base of the cavity may be arranged upstream of the cavity. The open end may be arranged downstream of the cavity. The cavity may have an elongate extension. The cavity may have a longitudinal central axis. A longitudinal direction may be the direction extending between the open and closed ends along the longitudinal central axis. The longitudinal central axis of the cavity may be parallel to the longitudinal axis of the aerosol-generating device.

The cavity may be configured as a heating chamber. The cavity may have a cylindrical shape. The cavity may have a hollow cylindrical shape. The cavity may have a shape corresponding to the shape of the aerosol-generating article to be received in the cavity. The cavity may have a circular cross-section. The cavity may have an elliptical or rectangular cross-section. The cavity may have an inner diameter corresponding to the outer diameter of the aerosol-generating article.

An airflow channel may run through the cavity. Ambient air may be drawn into the aerosol-generating device, into the cavity and towards the user through the airflow channel. Downstream of the cavity, a mouthpiece may be arranged or a user may directly draw on the aerosol-generating article. The airflow channel may extend through the mouthpiece.

In any of the aspects of the disclosure, the heating element may comprise an electrically resistive material. Suitable electrically resistive materials include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum platinum, gold and silver. Examples of suitable metal alloys include stainless steel, nickel-, cobalt-, chromium-, aluminium- titanium- zirconium-, hafnium-, niobium-, molybdenum-, tantalum-, tungsten-, tin-, gallium-, manganese-, gold- and iron-containing alloys, and super-alloys based on nickel, iron, cobalt, stainless steel, Timetal^{®} and iron-manganese-aluminium based alloys. In composite materials, the electrically resistive material may optionally be embedded in, encapsulated or coated with an insulating material or vice-versa, depending on the kinetics of energy transfer and the external physicochemical properties required.

As described, in any of the aspects of the disclosure, the heating element may be part of an aerosol-generating device. The aerosol-generating device may comprise an internal heating element or an external heating element, or both internal and external heating elements, where "internal" and "external" refer to the aerosol-forming substrate. An internal heating element may take any suitable form. For example, an internal heating element may take the form of a heating blade. Alternatively, the internal heater may take the form of a casing or substrate having different electro-conductive portions, or an electrically resistive metallic tube. Alternatively, the internal heating element may be one or more heating needles or rods that run through the center of the aerosol-forming substrate. Other alternatives include a heating wire or filament, for example a Ni-Cr (Nickel-Chromium), platinum, tungsten or alloy wire or a heating plate. Optionally, the internal heating element may be deposited in or on a rigid carrier material. In one such embodiment, the electrically resistive heating element may be formed using a metal having a defined relationship between temperature and resistivity. In such an exemplary device, the metal may be formed as a track on a suitable insulating material, such as ceramic material, and then sandwiched in another insulating material, such as a glass. Heaters formed in this manner may be used to both heat and monitor the temperature of the heating elements during operation.

An external heating element may take any suitable form. For example, an external heating element may take the form of one or more flexible heating foils on a dielectric substrate, such as polyimide. The flexible heating foils can be shaped to conform to the perimeter of the substrate receiving cavity. Alternatively, an external heating element may take the form of a metallic grid or grids, a flexible printed circuit board, a molded interconnect device (MID), ceramic heater, flexible carbon fibre heater or may be formed using a coating technique, such as plasma vapour deposition, on a suitable shaped substrate. An external heating element may also be formed using a metal having a defined relationship between temperature and resistivity. In such an exemplary device, the metal may be formed as a track between two layers of suitable insulating materials. An external heating element formed in this manner may be used to both heat and monitor the temperature of the external heating element during operation.

As an alternative to an electrically resistive heating element, the heating element may be configured as an induction heating element. The induction heating element may comprise an induction coil and a susceptor. In general, a susceptor is a material that is capable of generating heat, when penetrated by an alternating magnetic field. When located in an alternating magnetic field. If the susceptor is conductive, then typically eddy currents are induced by the alternating magnetic field. If the susceptor is magnetic, then typically another effect that contributes to the heating is commonly referred to hysteresis losses. Hysteresis losses occur mainly due to the movement of the magnetic domain blocks within the susceptor, because the magnetic orientation of these will align with the magnetic induction field, which alternates. Another effect contributing to the hysteresis loss is when the magnetic domains will grow or shrink within the susceptor. Commonly all these changes in the susceptor that happen on a nano-scale or below are referred to as "hysteresis losses", because they produce heat in the susceptor. Hence, if the susceptor is both magnetic and electrically conductive, both hysteresis losses and the generation of eddy currents will contribute to the heating of the susceptor. If the susceptor is magnetic, but not conductive, then hysteresis losses will be the only means by which the susceptor will heat, when penetrated by an alternating magnetic field. According to the invention, the susceptor may be electrically conductive or magnetic or both electrically conductive and magnetic. An alternating magnetic field generated by one or several induction coils heat the susceptor, which then transfers the heat to the aerosol-forming substrate, such that an aerosol is formed. The heat transfer may be mainly by conduction of heat. Such a transfer of heat is best, if the susceptor is in close thermal contact with the aerosol-forming substrate.

As used herein, the term 'aerosol-generating article' refers to an article comprising an aerosol-forming substrate that is capable of releasing volatile compounds that can form an aerosol. For example, an aerosol-generating article may be a smoking article that generates an aerosol that is directly inhalable into a user's lungs through the user's mouth. An aerosol-generating article may be disposable.

As used herein, the term 'aerosol-forming substrate' relates to a substrate capable of releasing one or more volatile compounds that can form an aerosol. Such volatile compounds may be released by heating the aerosol-forming substrate. An aerosol-forming substrate may conveniently be part of an aerosol-generating article or smoking article.

The aerosol-forming substrate may be a solid aerosol-forming substrate. The aerosol-forming substrate may comprise both solid and liquid components. The aerosol-forming substrate may comprise a tobacco-containing material containing volatile tobacco flavour compounds which are released from the substrate upon heating. The aerosol-forming substrate may comprise a non-tobacco material. The aerosol-forming substrate may comprise an aerosol former that facilitates the formation of a dense and stable aerosol. Examples of suitable aerosol formers are glycerine and propylene glycol.

The aerosol-generating substrate preferably comprises homogenised tobacco material, an aerosol-former and water. The aerosol-generating substrate most preferably comprises cut filler and glycerin as an aerosol former. Providing homogenised tobacco material may improve aerosol generation, the nicotine content and the flavour profile of the aerosol generated during heating of the aerosol-generating article. Specifically, the process of making homogenised tobacco involves grinding tobacco leaf, which more effectively enables the release of nicotine and flavours upon heating.

The invention further relates to the use of a humidity sensitive material in the disclosed aerosol-generating article, wherein a resistance to draw of the humidity sensitive material increases when subjected to an increasing humidity and wherein the resistance to draw of the humidity sensitive material decreases when subjected to a decreasing humidity in an aerosol generating article

The invention will be further described, by way of example only, with reference to the accompanying drawings in which:

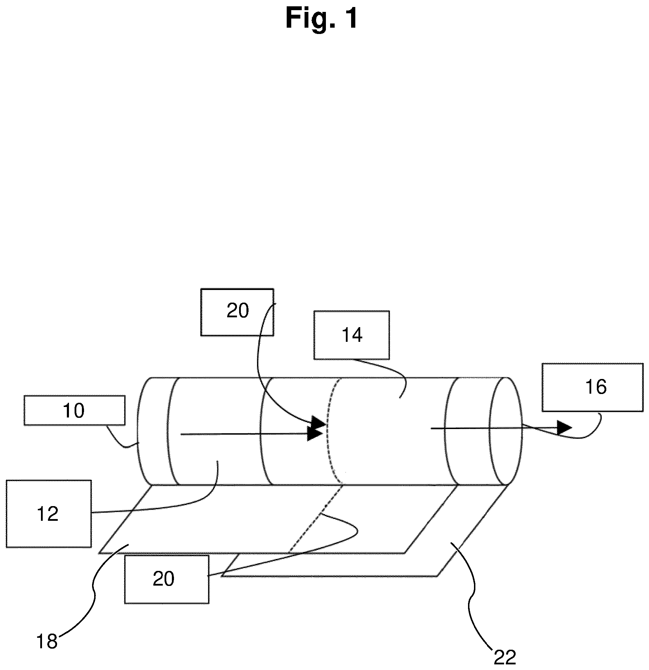

Fig. 1 shows an illustration of an aerosol-generating article according to the invention;

Figure 1 shows an aerosol-generating article having a front plug 10, a substrate portion 12 comprising aerosol-forming substrate, a ventilation portion 14, and a mouthpiece filter 16.

The front plug 10 is arranged at the distal end of the aerosol-generating article. The front plug 10 comprises a humidity sensitive material. A paper matrix, non-woven material or fiber material may act as a support material for the humidity sensitive material. The humidity sensitive material may be added to the paper matrix or the paper matrix may be impregnated with the humidity sensitive material. The humidity sensitive material may be added to the non-woven material or the non-woven material may be impregnated with the humidity sensitive material. The humidity sensitive material may be coated onto the fiber material.

The humidity sensitive material expands when subjected to an increased humidity. As the humidity sensitive material of the front plug 10 is in direct contact with the ambient environment, this will happen in high humidity conditions of the ambient environment.

A tipping paper 18 is arranged surrounding the periphery of the humidity sensitive material of the front plug 10. The tipping paper 18 confines the humidity sensitive material. As a result, the resistance to draw of the humidity sensitive material increases. Due to the increase in the resistance to draw of the humidity sensitive material, the resistance to draw of the front plug 10 and of the whole aerosol-generating article increases.

The tipping paper 18 also connects the front plug 10 with the substrate portion 12 and with the ventilation portion 14. The tipping paper 18 has perforations 20 in the area of the ventilation portion 14 to enable ambient air to be drawn into the ventilation portion 14 through the perforations 20. A sidewall of the ventilation portion 14, preferably made of cardboard, also has corresponding perforations 20 to enable ambient air to be drawn into the ventilation portion 14 through the perforations 20.

The combination of the humidity sensitive material in the front plug 10 and the perforations 20 in the ventilation portion 14 facilitate to reduce or prevent an undesired warm puff in high humidity environments. Particularly, the resistance to draw of the front plug 10 will, in such environments, increase as described herein. Consequently, more air will be drawn into the ventilation portion 14 through the perforations 20 in comparison with a low humidity environment where the resistance to draw of the front plug 10 will be lower since the humidity sensitive material has not expanded. More air being drawn into the ventilation portion 14 means that the airflow through the aerosol-generating article will be diluted with the ambient air and will cool down more rapidly. This will reduce or prevent an undesired warm feeling during a user experience.

A second tipping paper 22 may be provided securing the ventilation portion 14 and the mouthpiece filter 16.

The direction of airflow through the aerosol-generating article is indicated in Figure 1 by arrows.

## Claims

1. An aerosol-generating article comprising:
a substrate portion comprising an aerosol-forming substrate,
a ventilation portion downstream of the substrate portion, wherein the ventilation portion comprises perforations in a sidewall of the ventilation portion, wherein the perforations are configured to allow ambient air to be drawn into the ventilation portion through the perforations, and
a front plug upstream of the substrate portion, wherein the front plug comprises a humidity sensitive material that expands when subjected to an increasing humidity such that a resistance to draw of the front plug increases and that shrinks when subjected to a decreasing humidity such that a resistance to draw of the front plug decreases, wherein the humidity sensitive material expands by at least 10% when the humidity sensitive material is subjected to a humidity increase from a relative humidity of 50% to a relative humidity of 75%, wherein one of:
the humidity sensitive material comprises EVA resin, super absorbent polymer and carboxymethyl cellulose (CMC),
the humidity sensitive material comprises Cellulose acetate and polyesters,
the humidity sensitive material comprises Acrylamide and carboxymethyl cellulose (CMC),
the humidity sensitive material comprises HNBR rubber or acrylate copolymer and carboxymethyl cellulose (CMC).

2. The aerosol-generating article according to claim 2, wherein the humidity sensitive material expands by at least 20%, preferably by at least 30%, more preferably by at least 40%, when the humidity sensitive material is subjected to a humidity increase from a relative humidity of 50% to a relative humidity of 75%.

3. The aerosol-generating article according to any of the preceding claims, wherein the resistance to draw of the front plug increases by at least 10%, preferably by at least 20%, more preferably by at least 40%, most preferably by at least 60%, when the humidity sensitive material is subjected to a humidity increase from a relative humidity of 50% to a relative humidity of 75%.

4. The aerosol-generating article according to any of the preceding claims, wherein the humidity sensitive material consists of EVA resin, super absorbent polymer and carboxymethyl cellulose (CMC).

5. The aerosol-generating article according to any of claims 1 to 5, wherein the humidity sensitive material consists of Cellulose acetate and polyesters.

6. The aerosol-generating article according to any of claims 1 to 5, wherein the humidity sensitive material consists of Acrylamide and carboxymethyl cellulose (CMC).

7. The aerosol-generating article according to any of claims 1 to 5, wherein the humidity sensitive material consists of HNBR rubber or acrylate copolymer and carboxymethyl cellulose (CMC).

8. The aerosol-generating article according to any of the preceding claims, wherein the front plug has a resistance to draw of between 10 mmWg and 40 mmWg, preferably of between 15 mmWg and 30 mmWg, at a relative humidity of 50%.

9. The aerosol-generating article according to any of the preceding claims, wherein the front plug has a resistance to draw of between 20 mmWg and 60 mmWg, preferably of between 30 mmWg and 50 mmWg, at a relative humidity of 75%.

10. The aerosol-generating article according to any of the preceding claims, wherein a ventilation rate of the ventilation portion is between 30% and 50%, preferably between 35% and 45%, more preferably of 40%.

11. The aerosol-generating article according to any of the preceding claims, wherein the aerosol-generating article further comprises a mouthpiece filter downstream of the ventilation portion and preferably having a length of between 5 mm and 9 mm, preferably of between 6 mm and 8 mm, more preferably of 7 mm.

12. An aerosol-generating system comprising an aerosol-generating article according to any of the preceding claims and an aerosol-generating device having a cavity for receiving the aerosol-generating article.

13. Use of a humidity sensitive material in an aerosol-generating article according to any of claim 1 to 11,
wherein a resistance to draw of the humidity sensitive material increases when subjected to an increasing humidity and wherein the resistance to draw of the humidity sensitive material decreases when subjected to a decreasing humidity in an aerosol-generating article.

## Patentansprüche

1. Aerosolerzeugender Artikel, umfassend:
einen Substratabschnitt, der ein aerosolbildendes Substrat umfasst;
einen dem Substratabschnitt nachgelagerten Belüftungsabschnitt, wobei der Belüftungsabschnitt Perforationen in einer Seitenwand des Belüftungsabschnitts umfasst, wobei die Perforationen so ausgelegt sind, dass sie ein Ansaugen von Umgebungsluft durch die Perforationen hindurch in den Belüftungsabschnitt ermöglichen, und
einen dem Substratabschnitt vorgelagerten vorderen Einsatz, wobei der vordere Einsatz ein feuchtigkeitsempfindliches Material umfasst, das sich ausdehnt, wenn es einer steigenden Luftfeuchtigkeit ausgesetzt ist, sodass ein Zugwiderstand des vorderen Einsatzes zunimmt, und das sich zusammenzieht, wenn es einer abnehmenden Luftfeuchtigkeit ausgesetzt ist, sodass ein Zugwiderstand des vorderen Einsatzes abnimmt, wobei sich das feuchtigkeitsempfindliche Material um wenigstens 10 % ausdehnt, wenn das feuchtigkeitsempfindliche Material einem Luftfeuchtigkeitsanstieg von 50 % relativer Luftfeuchtigkeit auf 75 % relative Luftfeuchtigkeit ausgesetzt ist, wobei eines von Folgendem zutrifft:
das feuchtigkeitsempfindliche Material umfasst EVA-Harz, superabsorbierendes Polymer und Carboxymethylcellulose (CMC),
das feuchtigkeitsempfindliche Material umfasst Celluloseacetat und Polyester,
das feuchtigkeitsempfindliche Material umfasst Acrylamid und Carboxymethylcellulose (CMC),
das feuchtigkeitsempfindliche Material umfasst HNBR-Kautschuk oder Acrylat-Copolymer und Carboxymethylcellulose (CMC).

2. Aerosolerzeugender Artikel nach Anspruch 2, wobei sich das feuchtigkeitsempfindliche Material um wenigstens 20 %, bevorzugt um wenigstens 30 %, stärker bevorzugt um mindestens 40 %, ausdehnt, wenn das feuchtigkeitsempfindliche Material einem Luftfeuchtigkeitsanstieg von 50 % relativer Luftfeuchtigkeit auf 75 % relative Luftfeuchtigkeit ausgesetzt ist.

3. Aerosolerzeugender Artikel nach einem beliebigen der vorhergehenden Ansprüche, wobei der Zugwiderstand des vorderen Einsatzes um wenigstens 10 %, bevorzugt um wenigstens 20 %, stärker bevorzugt um mindestens 40 %, am meisten bevorzugt um wenigstens 60 %, zunimmt, wenn das feuchtigkeitsempfindliche Material einem Luftfeuchtigkeitsanstieg von 50 % relativer Luftfeuchtigkeit auf 75 % relative Luftfeuchtigkeit ausgesetzt ist.

4. Aerosolerzeugender Artikel nach einem beliebigen der vorhergehenden Ansprüche, wobei das feuchtigkeitsempfindliche Material aus EVA-Harz, superabsorbierendem Polymer und Carboxymethylcellulose (CMC) besteht.

5. Aerosolerzeugender Artikel nach einem beliebigen der Ansprüche 1 bis 5, wobei das feuchtigkeitsempfindliche Material aus Celluloseacetat und Polyestern besteht.

6. Aerosolerzeugender Artikel nach einem beliebigen der Ansprüche 1 bis 5, wobei das feuchtigkeitsempfindliche Material aus Acrylamid und Carboxymethylcellulose (CMC) besteht.

7. Aerosolerzeugender Artikel nach einem beliebigen der Ansprüche 1 bis 5, wobei das feuchtigkeitsempfindliche Material aus HNBR-Kautschuk oder Acrylat-Copolymer und Carboxymethylcellulose (CMC) besteht.

8. Aerosolerzeugender Artikel nach einem beliebigen der vorhergehenden Ansprüche, wobei der vordere Einsatz einen Zugwiderstand zwischen 10 mmWg und 40 mmWg, bevorzugt zwischen 15 mmWg und 30 mmWg, bei 50 % relativer Luftfeuchtigkeit aufweist.

9. Aerosolerzeugender Artikel nach einem beliebigen der vorhergehenden Ansprüche, wobei der vordere Einsatz einen Zugwiderstand zwischen 20 mmWg und 60 mmWg, bevorzugt zwischen 30 mmWg und 50 mmWg, bei 75 % relativer Luftfeuchtigkeit aufweist.

10. Aerosolerzeugender Artikel nach einem beliebigen der vorhergehenden Ansprüche, wobei eine Belüftungsrate des Belüftungsabschnitts zwischen 30 % und 50 %, bevorzugt zwischen 35 % und 45 %, stärker bevorzugt 40 %, beträgt.

11. Aerosolerzeugender Artikel nach einem beliebigen der vorhergehenden Ansprüche, wobei der aerosolerzeugende Artikel ferner einen Mundstückfilter umfasst, der dem Belüftungsabschnitt nachgelagert ist und bevorzugt eine Länge zwischen 5 mm und 9 mm, bevorzugt zwischen 6 mm und 8 mm, stärker bevorzugt von 7 mm, aufweist.

12. Aerosolerzeugungssystem, das einen aerosolerzeugenden Artikel nach einem beliebigen der vorhergehenden Ansprüche und eine Aerosolerzeugungsvorrichtung mit einem Hohlraum zum Aufnehmen des aerosolerzeugenden Artikels umfasst.

13. Verwendung eines feuchtigkeitsempfindlichen Materials in einem aerosolerzeugenden Artikel nach einem beliebigen der Ansprüche 1 bis 11, wobei ein Zugwiderstand des feuchtigkeitsempfindlichen Materials zunimmt, wenn es einer steigenden Luftfeuchtigkeit ausgesetzt ist, und wobei der Zugwiderstand des feuchtigkeitsempfindlichen Materials abnimmt, wenn es einer abnehmenden Luftfeuchtigkeit in einem aerosolerzeugenden Artikel ausgesetzt ist.

## Revendications

1. Article de génération d'aérosol comprenant :
une portion de substrat comprenant un substrat formant aérosol,
une portion de ventilation en aval de la portion de substrat, dans lequel la portion de ventilation comprend des perforations dans une paroi latérale de la portion de ventilation, dans lequel les perforations sont configurées pour permettre à l'air ambiant d'être tiré jusque dans la portion de ventilation à travers les perforations, et
un tampon avant en amont de la portion de substrat, dans lequel le tampon avant comprend un matériau sensible à l'humidité qui se dilate lorsqu'il est soumis à une augmentation de l'humidité de telle sorte qu'une résistance au tirage du tampon avant augmente et qui se contracte lorsqu'il est soumis à une diminution de l'humidité de telle sorte qu'une résistance au tirage du tampon avant diminue, dans lequel le matériau sensible à l'humidité se dilate d'au moins 10 % lorsque le matériau sensible à l'humidité est soumis à une augmentation de l'humidité depuis une humidité relative de 50 % jusqu'à une humidité relative de 75 %, dans lequel l'un parmi :
le matériau sensible à l'humidité comprend une résine copolymère acétate de vinyle-éthylène, un polymère superabsorbant et une carboxyméthylcellulose (CMC),
le matériau sensible à l'humidité comprend de l'acétate de cellulose et des polyesters,
le matériau sensible à l'humidité comprend de l'acrylamide et une carboxyméthylcellulose (CMC),
le matériau sensible à l'humidité comprend un caoutchouc HNBR ou un copolymère d'acrylate et une carboxyméthylcellulose (CMC).

2. Article de génération d'aérosol selon la revendication 2, dans lequel le matériau sensible à l'humidité se dilate d'au moins 20 %, de préférence d'au moins 30 %, de manière davantage préférée d'au moins 40 %, lorsque le matériau sensible à l'humidité est soumis à une augmentation d'humidité depuis une humidité relative de 50 % jusqu'à une humidité relative de 75 %.

3. Article de génération d'aérosol selon l'une quelconque des revendications précédentes, dans lequel la résistance au tirage du tampon avant augmente d'au moins 10 %, de préférence d'au moins 20 %, de manière davantage préférée d'au moins 40 %, de manière préférée entre toutes d'au moins 60 %, lorsque le matériau sensible à l'humidité est soumis à une augmentation d'humidité depuis une humidité relative de 50 % jusqu'à une humidité relative de 75 %.

4. Article de génération d'aérosol selon l'une quelconque des revendications précédentes, dans lequel le matériau sensible à l'humidité est constitué d'une résine copolymère acétate de vinyle-éthylène, d'un polymère superabsorbant et d'une carboxyméthylcellulose (CMC).

5. Article de génération d'aérosol selon l'une quelconque des revendications 1 à 5, dans lequel le matériau sensible à l'humidité est constitué d'acétate de cellulose et de polyesters.

6. Article de génération d'aérosol selon l'une quelconque des revendications 1 à 5, dans lequel le matériau sensible à l'humidité est constitué d'acrylamide et de carboxyméthylcellulose (CMC).

7. Article de génération d'aérosol selon l'une quelconque des revendications 1 à 5, dans lequel le matériau sensible à l'humidité est constitué de caoutchouc HNBR ou d'un copolymère d'acrylate et de carboxyméthylcellulose (CMC).

8. Article de génération d'aérosol selon l'une quelconque des revendications précédentes, dans lequel le tampon avant a une résistance au tirage d'entre 10 mmH₂O et 40 mmH₂O, de préférence d'entre 15 mmH₂O et 30 mmH₂O, à une humidité relative de 50 %.

9. Article de génération d'aérosol selon l'une quelconque des revendications précédentes, dans lequel le tampon avant a une résistance au tirage d'entre 20 mmH₂O et 60 mmH₂O, de préférence d'entre 30 mmH₂O et 50 mmH₂O, à une humidité relative de 75 %.

10. Article de génération d'aérosol selon l'une quelconque des revendications précédentes, dans lequel un taux de ventilation de la portion de ventilation est entre 30 % et 50 %, de préférence entre 35 % et 45 %, de manière davantage préférée de 40 %.

11. Article de génération d'aérosol selon l'une quelconque des revendications précédentes, dans lequel l'article de génération d'aérosol comprend en outre un filtre d'embout buccal en aval de la portion de ventilation et ayant de préférence une longueur d'entre 5 mm et 9 mm, de préférence d'entre 6 mm et 8 mm, de manière davantage préférée de 7 mm.

12. Système de génération d'aérosol comprenant un article de génération d'aérosol selon l'une quelconque des revendications précédentes et un dispositif de génération d'aérosol ayant une cavité destinée à recevoir l'article de génération d'aérosol.

13. Utilisation d'un matériau sensible à l'humidité dans un article de génération d'aérosol selon l'une quelconque des revendications 1 à 11, dans laquelle une résistance au tirage du matériau sensible à l'humidité augmente lorsqu'il est soumis à une humidité croissante et dans laquelle la résistance au tirage du matériau sensible à l'humidité diminue lorsqu'il est soumis à une humidité décroissante dans un article de génération d'aérosol.
